# EUROPEAN PATENT SPECIFICATION

(11) **EP 4 123 002 B1**
(45) Date of publication and mention of the grant of the patent: **03.12.2025**
(21) Application number: 21771810.5
(22) Date of filing: 11.03.2021
(51) Int. Cl.: C11B 9/02, B01D 11/02

(54) **HOUSEHOLD PLANT ESSENTIAL OIL EXTRACTOR**
EXTRAKTOR VON ÄTHERISCHEM ÖL AUS HAUSHALTSPFLANZEN
EXTRACTEUR D'HUILE ESSENTIELLE DE PLANTE DOMESTIQUE

(30) Priority: 16.03.2020 CN 202010180495
(43) Date of publication of application: 25.01.2023
(73) Proprietor: Chai, Chu, 5481 XT Schijndel (NL)
(72) Inventor: LI, Yonghua, Foshan, Guangdong 528000 (CN); CHAI, Chu, 5481 XT Schijndel (NL)
(74) Representative: IP Maison
(86) International application number: PCT/CN2021/080217
(87) International publication number: WO 2021/185145

(56) References cited:
- WO-A2-2013/192415
- CN-A- 105 154 236
- CN-A- 105 505 581
- CN-A- 110 564 511
- CN-A- 111 205 930
- CN-U- 207 175 895
- CN-U- 210 043 773
- CN-U- 212 222 913
- US-A1- 2012 211 697
- US-A1- 2017 015 936

## Description

### TECHNICAL FIELD

The present invention relates to a household plant essential oil extractor. The invention is defined in the appended claims.

### BACKGROUND

In the related art, a household essential oil extraction device facilitates for the operations for extraction of an essential oil by users at home. However, the existing household essential oil extraction device has a relatively complex structure, which is inconvenient for users to separate and collect an essential oil and reduces the practicability of the essential oil extraction device and the user experience. Relevant prior art is represented by document US 2012/211697 A1.

### SUMMARY

### Technical Problem

In addition, the arrangement of a temperature detection device of the existing household essential oil extraction device is not proper, resulting in a deviation between the detected temperature and the actual temperature. As a result, this may lead to a situation in which the main components of the plant essential oil are destroyed due to the inaccurate temperature detection during operation.

Therefore, it is necessary to improve the existing household essential oil extraction device.

### Solution to the Problem

### Technical Solution

The main object of the present invention is to overcome one of the deficiencies in the above Background, and a first object thereof is to provide a household plant essential oil extractor, which is simple in structure and is easy in operation for separating and collecting an essential oil.

The above object is achieved by means of the following technical solutions:
There is provided a household plant essential oil extractor, which includes a plant essential oil separation device, a plant essential oil collection device, and a heat absorption cup body, in which the plant essential oil separation device is detachably arranged inside the heat cup body and is configured for filtering a plant essential oil inside the heat cup body, and the plant essential oil collection device is detachably arranged on the plant essential oil separation device and is configured for collecting the filtered plant essential oil.

According to the invention, the household plant essential oil extractor further includes a base component, a control component, a heat dissipation component, a main body, and a heat conductive cup body, in which the main body is arranged on the base component; each of the control component, the heat dissipation component, and the heat conductive cup body is arranged inside the main body; a heating unit is arranged on an outer side wall of the heat conductive cup body, the heat absorption cup body is arranged inside the heat conductive cup body, a first temperature detection device is arranged on the heating unit, a second temperature detection device is arranged at the bottom of the heat absorption cup body, and the control component is electrically connected to the first temperature detection device and the second temperature detection device, respectively.

**In** some embodiments, the plant essential oil separation device includes a funnel, a filter screen component, and a filter tube, in which the filter screen component is arranged in an inlet of the funnel, and the filter tube is connected to an outlet of the funnel.

**In** some embodiments, the plant essential oil collection device includes a collection tube and a sealing kit, in which a lower end of the collection tube is connected to an upper end of the filter tube, and the sealing kit is sleeved outside or inside a joint where the collection tube and the filter tube connect.

According to the invention, the second temperature detection device includes a film temperature sensor, an internally connected electric ring, an externally connected electric ring, and a silica gel pad, in which the film temperature sensor, the internally connected electric ring, and the externally connected electric ring are attached to the bottom of the heat absorption cup body, a contact of the film temperature sensor is connected to the internally connected electric ring, another contact is connected to the externally connected electric ring, and the film temperature sensor, the internally connected electric ring, and the externally connected electric ring are fixed at the bottom of the heat absorption cup body by means of the silica gel pad.

**In** some embodiments, the main body is detachably mounted on the base component, the main body is rotatable relative to the base component, the control component includes a circuit board, the circuit board is provided with a rotary switch, the base component is connected to the rotary switch, and a positioning structure that cooperates with the rotary switch is arranged on the base component.

A method for operating a household plant essential oil extractor, that is outside the subject-matter of the claims, is described. The method is easy in operations for separating and collecting an essential oil and is beneficial to improving the user experience.

There is provided a method, outside the subject-matter of the claims, for operating a household plant essential oil extractor, in which the operating method applies to the household plant essential oil extractor as described above, and the operating method includes the following steps:
placing the roots or leaves or flowers of a plant into the heat absorption cup body, covering the heat absorption cup body with a cup cover, and then placing the heat absorption cup body into the heat conductive cup body;
powering on standby and selecting a corresponding baking (drying) function;
after baking, adding an oil or alcohol into the heat absorption cup body and selecting a corresponding extraction function;
removing the cup cover and then mounting the plant essential oil separation device on the heat absorption cup body;
after extraction, taking out the heat absorption cup body from the heat conductive cup body;
separating an essential oil in the heat absorption cup body from the plant by means of the plant essential oil separation device; and
adding water or a liquid with a density greater than that of the plant essential oil into the heat absorption cup body, mounting the plant essential oil collection device on the plant essential oil separation device, slowly pressing down the plant essential oil separation device to separate the essential oil from the plant and the water or the liquid with a density greater than that of the plant essential oil, and collecting the separated essential oil by means of the plant essential oil collection device.

In some embodiments, also outside the subject-matter of the claims, the step of adding the oil or alcohol into the heat absorption cup body and selecting the corresponding extraction function specifically involves:
selecting an oil extraction function in case oil is added into the heat absorption cup body; or
selecting an alcohol extraction function in case alcohol is added into the heat absorption cup body.

In some embodiments, the step of separating the essential oil in the heat absorption cup body from the plant by means of the plant essential oil separation device specifically involves:
turning over the heat absorption cup body, holding the plant essential oil separation device, and slowly pressing down the plant essential oil separation device to separate the essential oil in the heat absorption cup body from the plant.

### Beneficial Effects of the Invention

### Beneficial Effects

Compared with the prior art, the present invention has at least the following effects:
The household plant essential oil extractor of the present invention is simple in structure and is easy in operation for separating and collecting essential oil.

The described method, which is outside the subject-matter of the claims, for operating a household plant essential oil extractor of the present invention is easy in operations for separating and collecting an essential oil and is beneficial to improve the user experience.

The other beneficial results of the present invention will be illustrated in the detailed description in conjunction with the accompanying drawings.

### BRIEF DESCRIPTION OF DRAWINGS

### Description of the Drawings

FIG. 1 depicts a perspective schematic diagram of a plant essential oil extractor according to an embodiment;
FIG. 2 depicts a schematic diagram showing components of a plant essential oil extractor according to an embodiment;
FIG. 3 depicts a schematic flowchart of an operating method according to an embodiment not encompassed by the present invention; and
FIG. 4 depicts a schematic flowchart of a controlling method according to an embodiment not encompassed by the present invention.

### DETAILED DESCRIPTION

### Embodiments of the Invention

The present invention will be illustrated in further detail below in conjunction with the accompanying drawings and specific embodiments. The invention is defind by appended claims 1

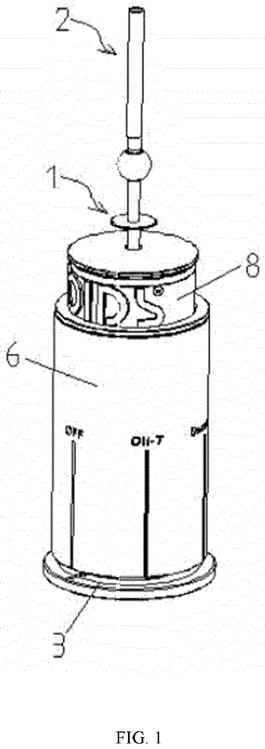

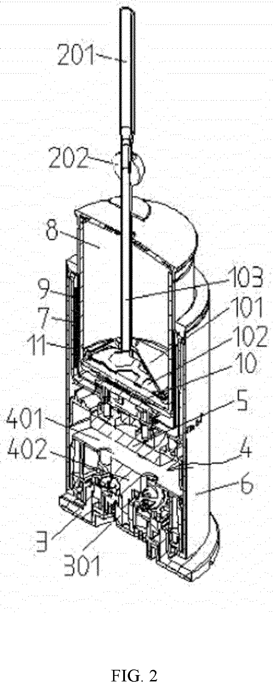

Embodiment I: As shown in FIGs. 1, 2 and 3, this example is directed to a household plant essential oil extractor, which includes a plant essential oil separation device 1, a plant essential oil collection device 2, a base component 3, a control component 4, a heat dissipation component 5, a main body 6, a heat conductive cup body 7, and a heat absorption cup body 8. The main body 6 is arranged on the base component 3. Each of the control component 4, the heat dissipation component 5, and the heat conductive cup body 7 is arranged inside the main body 6. A heating unit 9 is arranged on an outer side wall of the heat conductive cup body 7. The heat absorption cup body 8 is arranged inside the heat conductive cup body 7. A first temperature detection device is arranged on the heating unit 9. A second temperature detection device 10 is arranged at the bottom of the heat absorption cup body 8. The control component 4 is electrically connected to the first temperature detection device and the second temperature detection device 10, respectively. The plant essential oil separation device 1 is detachably arranged inside the heat absorption cup body 8, and the plant essential oil collection device 2 is detachably arranged on the plant essential oil separation device 1.

The household plant essential oil extractor of this embodiment is simple in structure and is easy in operation for separating and collecting essential oil. The plant essential oil separation device 1 is configured for separating the plant essential oil. And the plant essential oil collection device 2 is configured for collecting the plant essential oil. Thereby the separation and collection operations for the plant essential oil could be more convenient.

In addition, by means of the arrangement of the first temperature detection device on the heating unit 9, the temperature detection by the heating unit 9 could be performed more accurately, on this basis, data with improved accuracy can be provided for the control of the operation of the plant essential oil extractor by the control component 4. The control component 4 could control the operation of the plant essential oil extractor with improved accuracy and stability, so as to avoid the destruction of the main components of the plant essential oil during operation.

The plant essential oil separation device 1 is inside the heat absorption cup body 8, and the plant essential oil collection device 2 is outside the heat absorption cup body 8. After a plant and plant essential oil are subjected to programmed baking and extraction set in the plant essential oil extractor, a mixture of the plant and the plant essential oil is obtained. And by operating the plant essential oil separation device 1, the plant is separated from the plant essential oil, and the essential oil is collected by means of the plant essential oil collection device 2.

The heating unit 9 and the first temperature detection device are arranged on an outer side wall of the heat conductive cup body 7. The baking, extraction temperature and time were set in the control component 4 for different plants by a program, and the control component 4 controls the operation of the heating unit 9 such that the temperature of the liquid in the heat absorption cup body 8 could be kept at a temperature as set.

Compared with the related art, the present household plant essential oil extractor could perform constant temperature baking, extraction, separation and collection for various plants at a preset temperature for a preset time, could ensure successful extraction of the main components of the plant essential oil without being destroyed, and is easy in operation for separation and collection.

In this embodiment, the plant essential oil separation device 1 includes a funnel 101, a filter screen component 102, and a filter tube 103. the filter screen component 102 is arranged in an inlet of the funnel 101, and the filter tube 103 is connected to an outlet of the funnel 101. When using the plant essential oil extractor of this embodiment, the plant is first placed into the heat absorption cup body 8, the heating unit 9 is activated to dry the plant, and a liquid is then added into the heat absorption cup body 8. The liquid added to the heat absorption cup body 8 may be alcohol or oil or any liquid for extracting various plant essential oils. The heating unit 9 is activated to heat and extract the dried plant and the liquid. Once the heating of the plant and the liquid is completed, the heat absorption cup body 8 is placed upside down, the liquid would be filtered through the filter screen component 102 and then flow out through the funnel 101 and the filter tube 103, with the plant remained in the heat absorption cup body 8 due to being blocked by the filter screen component 102, thus realizing separation of the plant from the liquid and achieving effective extraction of the plant.

Preferably, the plant essential oil collection device 2 includes a collection tube 201 and a sealing kit 202. A lower end of the collection tube 201 is connected to an upper end of the filter tube 103. The sealing kit 202 is sleeved outside or inside the joint where the collection tube 201 and the filter tube 103 connect. When collecting the essential oil, the lower end of the collection tube 201 is connected to the upper end of the filter tube 103, the sealing kit 202 is sleeved outside the joint where the collection tube 201 and the filter tube 103 connect. The plant essential oil separation device 1 is then pressed down, the upper end of the collection tube 201 is tightened, and under the action of the plant essential oil separation device 1 and atmospheric pressure, the plant essential oil is pressed into the collection tube 201 and temporarily stored in the collection tube 201. When the essential oil in the collection tube 201 is to be released, it is only necessary to loosen the upper end of the collection tube 201, whereby the essential oil would flow into a storage container due to the gravity.

More preferably, the heating unit 9 covers the outer side wall of the heat conductive cup body 7. The heating unit 9 is externally covered with an elastic sleeve 11, and the heating unit 9 is fixed on the outer side wall of the heat conductive cup body 7 via the elastic sleeve 11. The above structure is simple, and the contact area between the heating unit 9 and the heat conductive cup body 7 could thus be increased, thereby effectively improving the heating efficiency of the heat conductive cup body 7 and power saving. In addition, the elastic sleeve 11 as arranged could facilitate the mounting and fixation of the heating unit 9, could also improve the safety and reliability of the use thereof, and effectively prevented the heating unit 9 from contacting other components and causing damage to the other components due to heat.

According to the invention, the second temperature detection device 10 includes a film temperature sensor, an internally connected electric ring, an externally connected electric ring, and a silica gel pad. The film temperature sensor, the internally connected electric ring, and the externally connected electric ring are attached to the bottom of the heat absorption cup body 8. A contact of the film temperature sensor is connected to the internally connected electric ring, and another contact is connected to the externally connected electric ring. And the film temperature sensor, the internally connected electric ring, and the externally connected electric ring are fixed at the bottom of the heat absorption cup body 8 by means of the silica gel pad. The above structure is simple and compact, and the design is rational and ingenious. The silica gel pad as arranged could facilitate the fixation and mounting of the film temperature sensor, the internally connected electric ring and the externally connected electric ring. In addition, the silica gel pad had a cushioning effect and could thus effectively protect the heat absorption cup body 8 made of glass. Furthermore, the noise generated when the heat absorption cup body 8 is taken and placed could be reduced, which is beneficial to improving the user experience.

In this embodiment, the main body 6 is detachably mounted on the base component 3, the main body 6 is rotatable relative to the base component 3. The control component 4 includes a circuit board 401, the circuit board 401 is provided with a rotary switch 402, the base component 3 is connected to the rotary switch 402. And a positioning structure 301 cooperating with the rotary switch 402 is arranged on the base component 3.

When the plant essential oil extractor of this embodiment is in use, when the user rotates the main body 6, the circuit board 401 and the rotary switch 402 on the circuit board 401 would be rotated relative to the base component. The rotary switch 402 would output a signal to the circuit board 401, and the circuit board starts the corresponding operating mode according to the signal output by the rotary switch 402. In addition, by means of the first temperature sensor and the second temperature sensor, the heating unit is controlled, and the temperature and timing of the heating unit are thus controlled. The extractor is simple in structure and is safe, reliable, and convenient to use, which could improve the user experience. For example, different modes of the plant essential oil extractor, e.g., baking mode, could be selected by rotating the main body 6. For the specific structures and descriptions of the rotary switch 402 and the positioning structure 301, reference can be made to the patent CN210043773U, which will not be repeated here to avoid repetition.

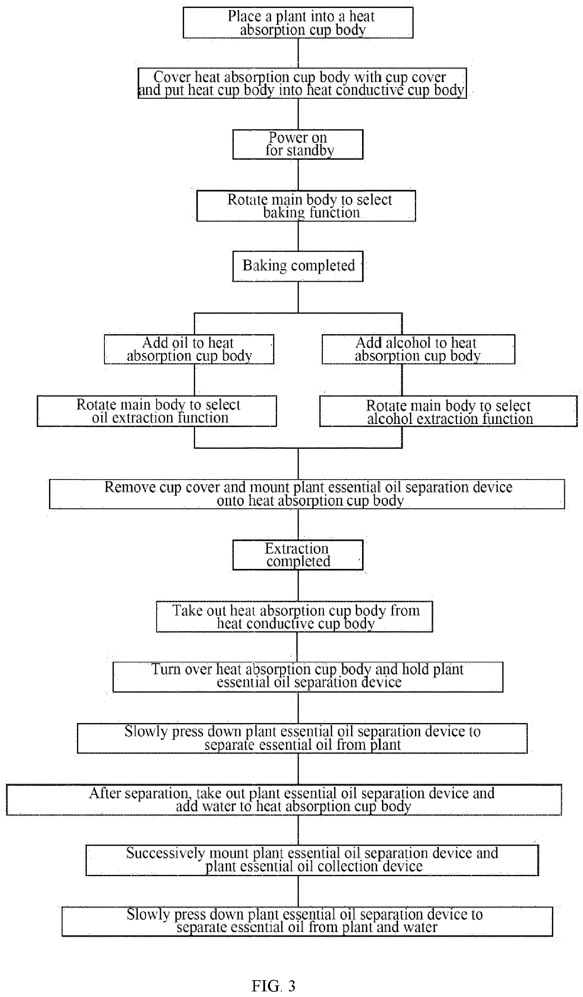

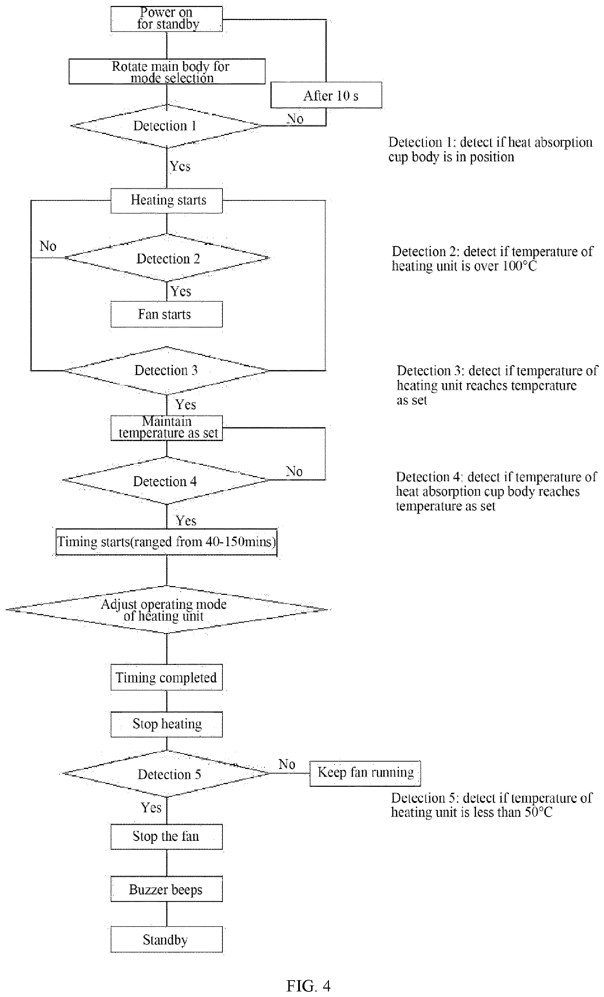

Embodiment II (not according to the claimed invention). As shown in FIGs. 3 and 4, this embodiment provides a method for operating a household plant essential oil extractor, which operating method is applied to the household plant essential oil extractor as described in Embodiment I, and the operating method includes the following steps.

Part of a plant, which might be roots, flowers, leaves, etc., is put into the heat absorption cup body 8, the heat absorption cup body is covered with a cup cover, and the heat absorption cup body 8 is then put into the heat conductive cup body 7, in which the cup cover is an ordinary cup cover. And when heating is to be performed, the cup body is placed on top of the heat absorption cup body 8.

A power supply is turned on for standby and a corresponding baking function is selected, specifically, the selection of the corresponding baking function (mode) is performed by rotating the main body 6.

After baking, i.e., after the system completed baking, an oil or alcohol is added into the heat absorption cup body 8 and the corresponding extraction function is selected, specifically, an oil extraction function is to be selected in case the oil is added into the heat absorption cup body 8, or an alcohol extraction function is to be selected in case alcohol is added into the heat absorption cup body 8. It is clear that, the selection for either the oil extraction function or the alcohol extraction function could be achieved by rotation of the main body 6.

The cup cover is removed and the plant essential oil separation device 1 is then mounted on the heat absorption cup body 8.

After the plant essential oil extractor completes extraction, the heat absorption cup body 8 is taken out from the heat conductive cup body 7.

The essential oil in the heat absorption cup body 8 is separated from the plant by means of the plant essential oil separation device 1, specifically by turning over the heat absorption cup body 8, holding the plant essential oil separation device 1, specifically holding the lower end of the filter tube 103, and slowly pressing down the plant essential oil separation device 1 to separate the essential oil extracted in the heat absorption cup body 8 from the plant.

When the plant essential oil separation device 1 is pressed down to the bottom of the heat absorption cup body 8, the plant essential oil separation device 1 is taken out, water or a liquid with a density greater than that of the plant essential oil is added into the heat absorption cup body 8, the plant essential oil separation device 1 is mounted on the heat absorption cup body 8, the plant essential oil collection device 2 is mounted on the plant essential oil separation device 1, the plant essential oil separation device 1 is slowly pressed down to separate the essential oil from the plant and the water or the liquid with a density greater than that of the plant essential oil, the separated essential oil is collected by means of the plant essential oil collection device 2. And the finally collected plant essential oil is stored in the collection tube 201. When collecting the essential oil, the lower end of the collection tube 201 is connected to the upper end of the filter tube 103, the sealing kit 202 is sleeved outside the joint where the collection tube 201 and the filter tube 103 connect, the plant essential oil separation device 1 is then pressed down, the upper end of the collection tube 201 is tightened, and under the action of the plant essential oil separation device 1 and atmospheric pressure, the plant essential oil is pressed into the collection tube 201 and temporarily stored in the collection tube 201. When the essential oil in the collection tube 201 is to be released, it is only necessary to loosen the upper end of the collection tube 201, whereby the essential oil would flow into a storage container due to the gravity.

As shown in FIGs. 3 and 4, the control method for the plant essential oil extractor provided by this embodiment is described below and the method includes the following steps.

The power supply is turned on for standby;

The main body 6 is rotated for mode selection;

The system is started and detection is performed as to whether the heat absorption cup body 8 is held in place. And if the heat absorption cup body 8 is in place, heating is started, or if the heat absorption cup body 8 is not in place, a further detection as to whether the heat absorption cup body 8 is in place is performed after 10 s, and if the heat absorption cup body is still not in place after 30 s, the system exited and entered standby;

After heating is started, detection is performed as to whether the temperature of the heating unit 9 reaches the set temperature and whether the temperature of the heating unit 9 is higher than 100°C. And specifically, the temperature of the heating unit 9 is detected by means of the first temperature detection device, in which when the temperature of the heating unit 9 is higher than 100°C, the heat dissipation component 5, i.e., a fan, is started, and when the temperature of the heating unit 9 reached the set temperature, the set temperature is maintained.

The detection of whether the temperature of the heat absorption cup body 8 reaches the set temperature i is specifically performed by the temperature detection of the heat absorption cup body 8 by means of the second temperature detection device.

The system starts timing, and the duration of the operation varies from 40 to 150 minutes depending on the operating mode.

The operating mode of the heating unit 9 is adjusted; and specifically, when the temperature of the heat absorption cup body 8 is lower than the set temperature, heating is started, and when the temperature of the heat absorption cup body 8 is higher than the set temperature, heating is stopped.

Timing is completed.

Heating is stopped.

Detection is performed as to whether the temperature of the heating unit 9 is lower than 50°C is performed.

If the temperature of the heating unit 9 is higher than 50°C, the heat dissipation component 5 is controlled for maintaining the operation; and if the temperature of the heating unit 9 is lower than 50°C, the user is informed that the system has completed the operation, specifically by alerting the user with a buzzer sound.

The system enters the standby state.

## Claims

1. A household plant essential oil extractor, comprising a plant essential oil separation device (1), a plant essential oil collection device (2), and a heat absorption cup body (8), wherein the plant essential oil separation device (1) is detachably arranged inside the heat absorption cup body (8) and is configured for filtering a plant essential oil inside the heat absorption cup body (8), and the plant essential oil collection device (2) is detachably arranged on the plant essential oil separation device (1) and is configured for collecting the filtered plant essential oil further comprising a base component (3), a control component (4), a heat dissipation component (5), a main body (6), and a heat conductive cup body (7); wherein the main body (6) is arranged on the base component (3); each of the control component (4), the heat dissipation component (5), and the heat conductive cup body (7) is arranged inside the main body (6); a heating unit (9) is arranged on an outer side wall of the heat conductive cup body (7); the heat absorption cup body (8) is arranged inside the heat conductive cup body (7); a first temperature detection device is arranged on the heating unit (9), a second temperature detection device (10) is arranged at the bottom of the heat absorption cup body (8); and the control component (4) is electrically connected to the first temperature detection device and the second temperature detection device (10), respectively, wherein the second temperature detection device (10) comprises a film temperature sensor, an internally connected electric ring, an externally connected electric ring, and a silica gel pad, wherein the film temperature sensor, the internally connected electric ring, and the externally connected electric ring are attached to the bottom of the heat absorption cup body (8); a contact of the film temperature sensor is connected to the internally connected electric ring, another contact is connected to the externally connected electric ring; and the film temperature sensor, the internally connected electric ring, and the externally connected electric ring are fixed at the bottom of the heat absorption cup body (8) by means of the silica gel pad.

2. The household plant essential oil extractor according claim 1, **characterized in that** the main body (6) is detachably mounted on the base component (3), the main body (6) is rotatable relative to the base component (3); the control component (4) comprises a circuit board (401), the circuit board (401) is provided with a rotary switch (402), the base component (3) is connected to the rotary switch (402), and a positioning structure (301) that cooperates with the rotary switch (402) is arranged on the base component (3).

## Patentansprüche

1. Extraktor von ätherischem Öl aus Haushaltspflanzen, aufweisend eine Trennvorrichtung (1) für ätherisches Pflanzenöl, eine Sammelvorrichtung (2) für ätherisches Pflanzenöl und einen Wärme absorbierenden Becherkörper (8), wobei die Trennvorrichtung (1) für ätherisches Pflanzenöl im Innern des Wärme absorbierenden Becherkörpers (8) abnehmbar angeordnet ist und ausgelegt ist, im Innern des Wärme absorbierenden Becherkörpers (8) ein ätherisches Pflanzenöl zu filtern, und die Sammelvorrichtung (2) für ätherisches Pflanzenöl ist auf der Trennvorrichtung (1) für ätherisches Pflanzenöl abnehmbar angeordnet und ist zum Sammeln des gefilterten ätherischen Pflanzenöls ausgelegt, weiter aufweisend ein Grundbauteil (3), ein Steuerbauteil (4), ein Wärme dissipierendes Bauteil (5), einen Hauptkörper (6) und einen Wärme leitenden Becherkörper (7); wobei der Hauptkörper (6) auf dem Grundbauteil (3) angeordnet ist; das Steuerbauteil (4), das Wärme dissipierende Bauteil (5) und der Wärme leitende Becherkörper (7) jeweils im Innern des Hauptkörpers (6) angeordnet sind; eine Heizeinheit (9) auf einer äußeren Seitenwand des Wärme leitenden Becherkörpers (7) angeordnet ist; der Wärme absorbierende Becherkörper (8) im Innern des Wärme leitenden Becherkörpers (7) angeordnet ist; eine erste Temperaturerfassungsvorrichtung auf der Heizeinheit (9) angeordnet ist, eine zweite Temperaturerfassungsvorrichtung (10) unten am Wärme absorbierenden Becherkörper (8) angeordnet ist; und das Steuerbauteil (4) mit der ersten Temperaturerfassungsvorrichtung und der zweiten Temperaturerfassungsvorrichtung (10) jeweils elektrisch verbunden ist, wobei die zweite Temperaturerfassungsvorrichtung (10) einen Dünnfilmtemperatursensor, einen innerlich verbundenen elektrischen Ring, einen äußerlich verbundenen elektrischen Ring und ein Silicagelpolster aufweist, wobei der Dünnfilmtemperatursensor, der innerlich verbundene elektrische Ring und der äußerlich verbundene elektrische Ring unten am Wärme absorbierenden Becherkörper (8) befestigt sind; ein Kontakt des Dünnfilmtemperatursensors mit dem innerlich verbundenen elektrischen Ring verbunden ist, ein anderer Kontakt mit dem äußerlich verbundenen elektrischen Ring verbunden ist; und der Dünnfilmtemperatursensor, der innerlich verbundene elektrische Ring und der äußerlich verbundene elektrische Ring mittels des Silicagelpolsters unten am Wärme absorbierenden Becherkörper (8) befestigt sind.

2. Extraktor von ätherischem Öl aus Haushaltspflanzen nach Anspruch 1, **dadurch gekennzeichnet, dass** der Hauptkörper (6) an dem Grundbauteil (3) abnehmbar angebracht ist, wobei der Hauptkörper (6) bezüglich des Grundbauteils (3) drehbar ist; das Steuerbauteil (4) eine Leiterplatte (401) aufweist, wobei die Leiterplatte (401) mit einem Drehschalter (402) versehen ist, das Grundbauteil (3) mit dem Drehschalter (402) verbunden ist, und eine Positionierstruktur (301), die mit dem Drehschalter (402) zusammenwirkt, ist auf dem Grundbauteil (3) angeordnet.

## Revendications

1. Extracteur d'huile essentielle de plante domestique, comprenant un dispositif de séparation d'huile essentielle de plante (1), un dispositif de collecte d'huile essentielle de plante (2) et un corps de coupelle d'absorption de chaleur (8), dans lequel le dispositif de séparation d'huile essentielle de plante (1) est disposé de façon détachable à l'intérieur du corps de coupelle d'absorption de chaleur (8) et est configuré pour filtrer une huile essentielle de plante à l'intérieur du corps de coupelle d'absorption de chaleur (8), et le dispositif de collecte d'huile essentielle de plante (2) est disposé de façon détachable sur le dispositif de séparation d'huile essentielle de plante (1) et est configuré pour collecter l'huile essentielle de plante filtrée comprenant en outre un composant de base (3), un composant de commande (4), un composant de dissipation de chaleur (5), un corps principal (6) et un corps de coupelle thermiquement conducteur (7) ; dans lequel le corps principal (6) est disposé sur le composant de base (3) ; chacun du composant de commande (4), du composant de dissipation de chaleur (5) et du corps de coupelle thermiquement conducteur (7) est disposé à l'intérieur du corps principal (6) ; une unité de chauffage (9) est disposée sur une paroi latérale externe du corps de coupelle thermiquement conducteur (7) ; le corps de coupelle d'absorption de chaleur (8) est disposé à l'intérieur du corps de coupelle thermiquement conducteur (7) ; un premier dispositif de détection de température est disposé sur l'unité de chauffage (9), un deuxième dispositif de détection de température (10) est disposé au fond du corps de coupelle d'absorption de chaleur (8) ; et le composant de commande (4) est connecté électriquement au premier dispositif de détection de température et au deuxième dispositif de détection de température (10), respectivement, **caractérisé en ce que** le deuxième dispositif de détection de température (10) comprend un capteur de température à film, un anneau électrique connecté à l'intérieur, un anneau électrique connecté à l'extérieur et un tampon de gel de silice, dans lequel le capteur de température à film, l'anneau électrique connecté à l'intérieur et l'anneau électrique connecté à l'extérieur sont fixés au fond du corps de coupelle d'absorption de chaleur (8) ; un contact du capteur de température à film est connecté à la bague électrique connectée à l'intérieur, un autre contact est connecté à la bague électrique connectée à l'extérieur ; et le capteur de température à film, la bague électrique connectée à l'intérieur et la bague électrique connectée à l'extérieur sont fixés au fond du corps de coupelle d'absorption de chaleur (8) au moyen du tampon de gel de silice.

2. Extracteur d'huile essentielle de centrale domestique selon la revendication 1, **caractérisé en ce que** le corps principal (6) est monté de façon détachable sur le composant de base (3), le corps principal (6) peut tourner par rapport au composant de base (3) ; le composant de commande (4) comprend une carte de circuit (401), la carte de circuit (401) est pourvue d'un commutateur rotatif (402), le composant de base (3) est connecté au commutateur rotatif (402), et une structure de positionnement (301) qui coopère avec le commutateur rotatif (402) est disposée sur le composant de base (3).
